Europäisches Patentamt

European Patent Office

Office européen des brevets

(19)

(11) **EP 1 523 194 A2**

(12) **EUROPEAN PATENT APPLICATION**

(43) Date of publication:
**13.04.2005 Bulletin 2005/15**

(51) Int Cl.7: **H04N 7/24**, G06F 17/30

(21) Application number: **05000639.4**

(22) Date of filing: **31.12.1999**

(84) Designated Contracting States:
**DE FR GB IT NL**

(30) Priority: **30.01.1999 KR 9903015**

(62) Document number(s) of the earlier application(s) in accordance with Art. 76 EPC:
**99962551.0 / 1 074 022**

(71) Applicant: **LG ELECTRONICS INC.**
**Seoul 150-010 (KR)**

(72) Inventor: **Jung, Sung Bae**
**Seoul 152-034 (KR)**

(74) Representative: **Garel, Régis**
**Cabinet Plasseraud**
**65/67 rue de la Victoire**
**75440 Paris Cedex 09 (FR)**

Remarks:
This application was filed on 14 - 01 - 2005 as a divisional application to the application mentioned under INID code 62.

(54) **Method of describing a digest stream information for a multimedia content and digest segment group description for describing a summary of multimedia contents**

(57) The present invention is intended to provide a method of describing a digest stream information for a multimedia content, comprising:

- describing digest segment information for each digest segment;

- describing digest segment group information using different levels of detail; and
- describing a digest stream information with a set of digest segment group information.

# FIG.1

DIGEST SEGMENT

**Description**

BACKGROUND OF THE INVENTION

1. Field of the Invention

The present invention relates to a technique for describing a digest stream information for a multimedia content and a digest segment group description for describing a summary of multimedia contents.

2. Description of the Prior Art

In a multimedia server system such as a VOD (Video-on-Demand) server system, a broadcast system, a karaoke, etc., a digest stream of a multimedia stream is provided for an user, and the user understands the points in the content(e.g., movie, drama, sports, etc.) of the multimedia stream by accessing the digest stream. If the digest stream is a video program, the user will browse it, and if the digest stream is an audio program, the user will hear it.

The digest stream of a multimedia stream is constructed by arranging audio-visual segments, the essence of an original stream in the development of the story, in a time sequence. Here, the segment is a sequence of continuous frames. Since the digest stream is a sub stream of the multimedia stream, the size of the digest stream is much smaller than that of the original stream. Thus, the user who is to access a video program or an audio program by navigating a multimedia server system wants to access the digest stream of a multimedia stream rather than the entire stream thereof, in order to know the digest of the entire stream.

Of methods of digesting a multimedia stream are a method of displaying key frames and a method of gathering important parts of an original stream and displaying them in a sub stream.

In the former method, because it is difficult for the user to understand the entire flow of the original stream and display many key frames at a time, an additional operation such as a screen scrolling is required in order to understand the content of the stream, thereby causing an inconvenience.

In the latter method, generally, a content provider extracts a sub stream from the original stream, separates it from the original stream, and stores it in a digest stream. In this case, an additional storage for storing the digest stream is needed. In addition, the content provider edits only a certain time amount of digest stream and provides it to the user. Accordingly, the user can access only a single level digest stream edited by the content provider, so that he or she cannot obtain various digest streams of a desired level. For example, suppose that the running time of an original stream is two hours and the running time of a provided digest stream is 10 minutes, the user may want to get various digest streams of 5, 10 and 20 minutes, respectively, depending upon his or her taste. That is, some users may want to get a digest stream of 10 minutes to which a two-hour movie is digested, and other users may want to get a digest stream of 5 minutes to which a two-hour movie is digested. However, since the digest stream provided in this method is of 10 minutes, the user only get a digest stream having a 10-minutes running time.

Therefore, in order to satisfy user's need, the content provider has to edit and store a multi-level digest stream. In this case, a large amount of storage is needed, and accordingly, there occurs difficulty in managing each stream according to the multi-levels of the digest stream.

SUMMARY OF THE INVENTION

Accordingly, it is an object of the present invention to provide a multi-level digest stream to the user, thereby dynamically coping with the level of user's need with respect to a digest stream.

It is another object of the present invention to provide a multi-level digest stream by using a small amount of storage.

It is yet another object of the present invention to reduce the encoding time of a digest stream.

To achieve the above objects, there is provided a method of describing a digest stream information for a multimedia content, comprising:

- describing digest segment information for each digest segment;
- describing digest segment group information using different levels of detail; and
- describing a digest stream information with a set of digest segment group information.

To achieve the above objects, there is provided a method of describing digest segment group information for multimedia contents, the method comprising:

- describing a level information and a duration information of said digest segment group, wherein said digest segment group includes a set of digest segments, and wherein the level information can be described by multiple levels.

To achieve the above objects, there is provided a digest segment group description for describing a summary of multimedia contents, comprising:

- a level information and a duration information of said digest segment group, wherein said digest segment group includes a set of digest segments, and wherein the level information can be described by multiple levels.

Additional advantages, objects and features of the invention will become more apparent from the description which follows.

BRIEF DESCRIPTION OF THE INVENTION.

The present invention will become more fully understood from the detailed description given hereinbelow and the accompanying drawings which are given by way of illustration only, and thus are not limitative of the present invention, and wherein:

Figure 1 shows the construction of multi-level digest segments of a multimedia stream in accordance with an embodiment of the present invention;
Figure 2 shows the construction of a multi-level digest segment information scheme of a multimedia stream in accordance with an embodiment of the present invention;
Figure 3 shows the construction of a multi-level digest segment information scheme of a multimedia stream in accordance with another embodiment of the present invention;
Figure 4 shows an example of multi-level digest streams constructed by the multi-level digest segment information scheme;
Figure 5 is a graph showing the total running time of a digest stream according to a digest level;
Figure 6 is a schematic block diagram of an apparatus for generating a multi-level digest stream of a multimedia stream in accordance with an embodiment of the present invention;
Figure 7 is a schematic block diagram of an apparatus for generating a multi-level digest stream of a multimedia stream in accordance with another embodiment of the present invention;

DETAILED DESCRIPTION OF THE PREFERRED EMBODIMENTS.

In a content-based data area of a multimedia stream, generally, an appearance of an audio visual object, a state of an audio visual object, an event, a background, scene information, shot information, segment information, etc. are described on a time axis. According to the present invention, the data structure of a multi-level digest segment information scheme for providing a multi-level digest stream is described in the content-based data area thereof. The multi-level digest segment information scheme is constructed of a plurality of multi-level digest segment information structures, each multi-level digest segment information structure is a data structure for describing multi-level digest segments in which a time range information on each digest segment is described and also a digest level information can be described. Moreover, in some cases, data for representing the running time of a digest stream or the total running time of digest segments of each digest level can be additionally described. A digest stream is comprised of digest segments in total, each digest segment has an importance level information which is used as a digest level for generating a multi-level digest stream.

In addition, each digest segment can be represented by a time range information on time continuous data, and the time range information can be represented by the start point and end point of the digest segments, or the start point and duration of the digest segments.

Meanwhile, the digest segment is different from a shot, a scene and the like. Taking example by drama, generally, a digest stream is not constructed by connecting shots or scenes. Because the whole content can be analogized by browsing only parts of a shot or a scene in most cases, a digest stream is constructed by connecting the parts of a shot or a scene. In a field such as sports, the digest stream does not use a shot or a scene for the reason of the characteristics thereof.

In some cases, the digest segment corresponds to a shot or a scene, but, in most cases, it does not corresponds to them. Therefore, in the present invention, a multi-level digest segment information scheme for providing a multi-level digest stream by giving an importance level to a digest segment, rather than by assigning an importance level to a shot or a scene to thereby constructing a digest segment and using it for generating a digest stream, is proposed. Here, the digest segment is defined as a sequence of continuous frames, which is a general idea of covering shots or segments.

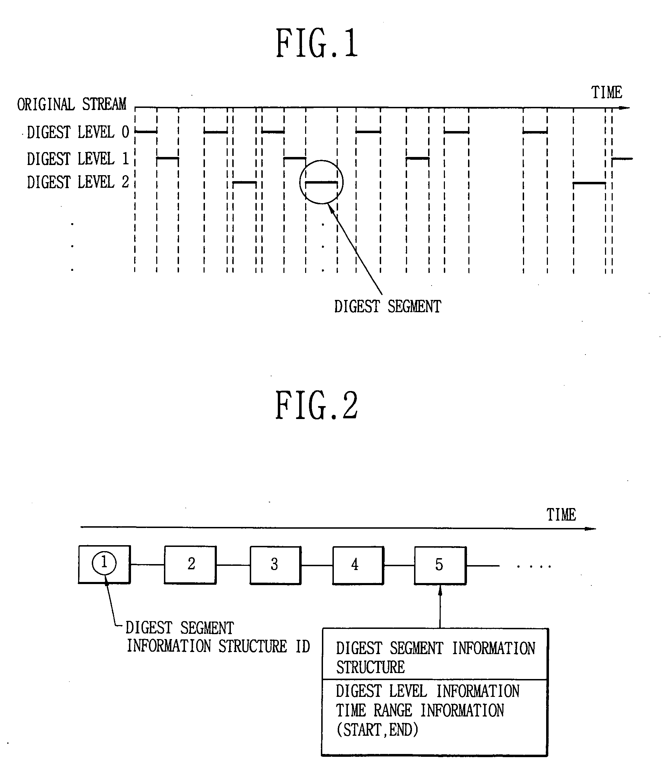

The construction of a digest stream in accordance with the present invention will now be described with reference to Figures 1 through 5.

Figure 1 shows the construction of multi-level digest segments of a multimedia stream in accordance with an embodiment of the present invention. As illustrated in Figure1, a horizontal axis is a time axis, and a vertical axis is a digest level axis. It is shown that an original stream, which is a multimedia stream, is divided into a plurality of digest segments, each of which is divided into a plurality of digest levels. In the present invention, it is assumed that a first digest level '0' is highest in priority, and a n-th digest level 'n-1' is lowest.

Figure 2 shows the construction of a multi-level digest segment information scheme of a multimedia stream in accordance with an embodiment of the present invention. A portion illustrated by a square is a digest segment information structure, and a number illustrated within the square is an ID of the digest segment information structure, which is stated for the convenience of explanation. Digest segment structures can be sequentially arranged in a time sequence, each of which has its digest level and time range information(start point and end point), or its start point and duration.

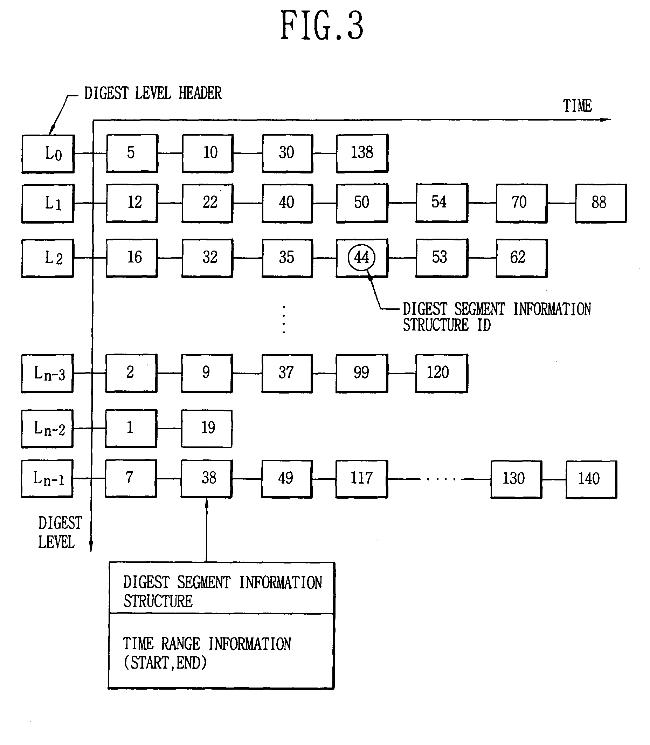

Figure 3 shows the construction of a multi-level digest segment information scheme of a multimedia stream different from that of Figure 2. Digest level headers($L_0$, $L_1$, ..., $L_{n-1}$) are divided according to digest levels, and assuming that the number of digest levels is n, the number of digest level headers is n. In each digest

level header($L_0$, $L_1$, ..., $L_{n-1}$), digest segment information structure of the same digest level are arranged in a time sequence. For instance, a first digest level header ($L_0$) has digest segment information structures 5, 10, 30 and 138 arranged therein, and a second digest segment information structures 12, 22, 40, 50, 54, 70 and 88 arranged therein. In this manner, unlike the digest segment information structure in accordance with an embodiment of the present invention as shown in Figure 2, the digest segment information structure in accordance with another embodiment of the present invention as shown in Figure 3 has its time range information, and its digest level is described in its digest level header. Herein, information on the position of a first digest segment information structure among a plurality of digest segment information structures belonging to each digest level header may be needed. In this case, the information on the position can be contained in the digest level deader or other area. Meanwhile, the presentation as illustrated in Figure 2 and the presentation as illustrated in Figure 3 are easily convertible each other.

The method of obtaining a multi-level digest stream from a multi-level digest segment information scheme of a multimedia stream thus described will be described below.

It is assumed that the number of digest levels of an original stream is n, and the number of digest segments in the entire original stream is m as described above. $S_j$ denotes a j-th digest segment information structure, $L(S_j)$ denotes a digest level of the digest segment information structure $S_j$, and Hi denotes a digest stream of an i-th level. The digest stream can be represented by a sequence of digest segment information structures, so that when a set of digest segments of the digest stream($H_i$) is denoted by $S(H_i)$, the set S(Hi) is defined as follows:

$$S(Hi) = \{S_j \,|L(S_j) = 0,1,2,...,I, (j\text{-}0,1,2,...,m\text{-}1)\}$$

That is, each element of the set $S(H_i)$ is a digest segment information structure, which digest level is equal to i or less. All the digest segment information structures contained in the set $S(H_i)$ can be sorted in a time sequence. According to the definition of the above set $S(H_i)$, a k+1-th digest stream($H_k$+1) includes a k-th digest stream($H_k$).

Taking example by Figure 3, a first digest stream($H_0$) is constructed by arranging digest segment information structures(S5, S10, S30 and S138) of digest level '0' in a time sequence, and a second digest stream ($H_1$) is constructed by arranging the digest segment information structures(S5, S10, S30 and S138) of the first digest stream($H_0$) and digest segment information structures(S12, S22, S40, S50, S54, S70 and S88) of digest level '1' in a time sequence. That is, the second digest stream($H_1$) is constructed by arranging digest segment information structures(S5, S10, S12, S22, S30, S40, S50, S54, S70, S88 and S138) in a time sequence.

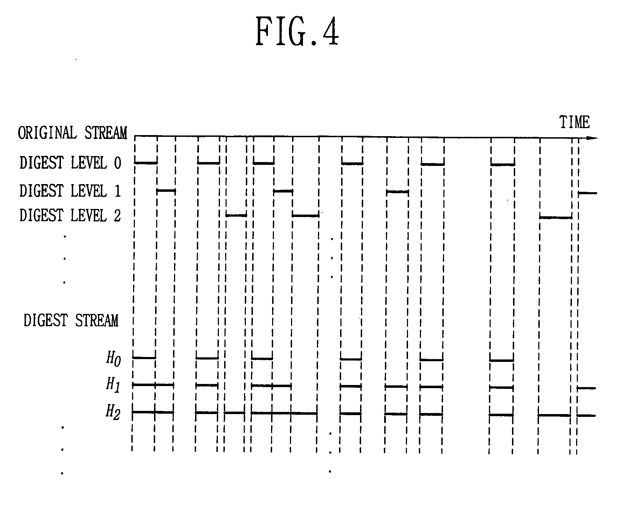

Figure 4 shows an example of multi-level digest streams constructed by the above-described method.

Next, the running time of each digest stream can be obtained based on the time range information contained in each of the plurality of digest segment information structures, which will be described below.

The total running time of the digest segment information structures belonging to a i-th digest level is the sum of the running times of each of digest segment information structures which belong to the i-th digest level.

That is, the running time $R(H_k)$ of a k-th digest stream($H_k$) can be represented by the sum of the running time of a plurality of digest levels($L_i$) forming the k-the digest stream($H_k$), which can be expressed as follows:

$$R(H_k) = \sum_{i=0}^{i=k} R(Li)$$

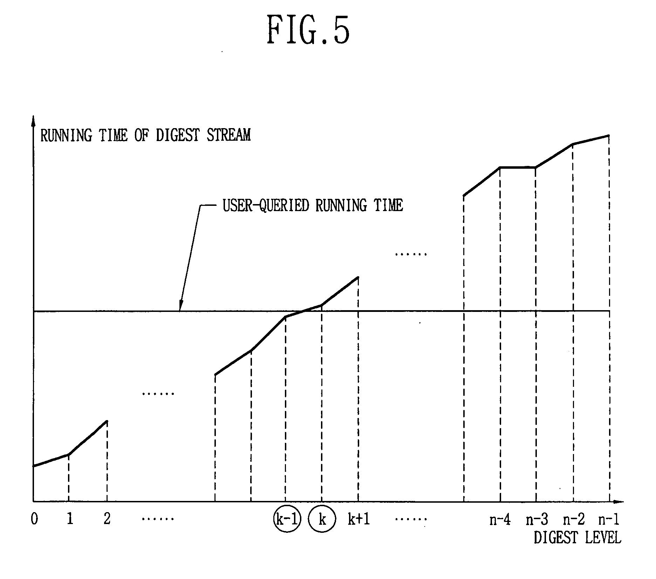

Figure 5 is a graph showing the total running time of a digest stream according to a digest level. As illustrated therein, since a digest stream($H_{k+1}$) includes a digest stream($H_k$), the running time $R(H_{k+1})$ of the digest stream($H_{k+1}$) is equal to the running time $R(H_k)$ of the digest stream($H_k$) or more.

Next, the operation of providing a digest stream according to the query of the user will be described.

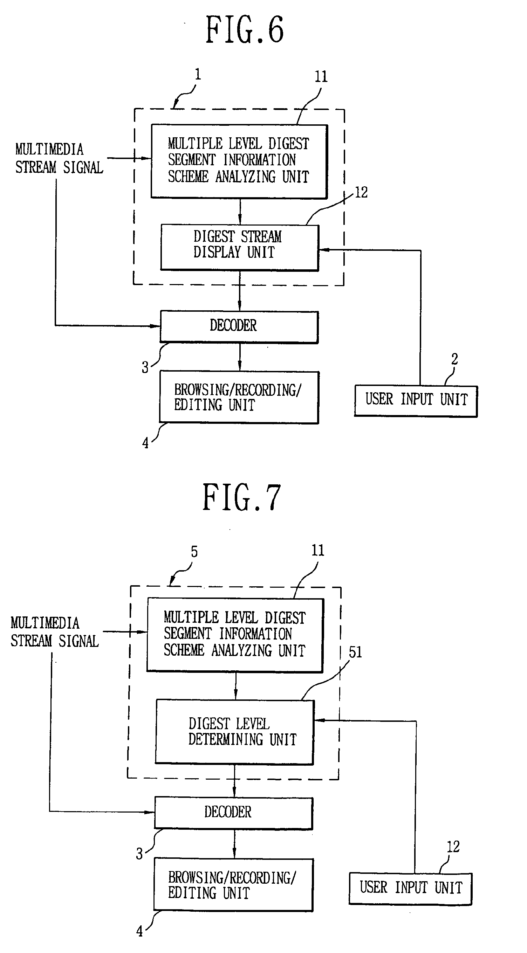

Figure 6 is a schematic block diagram of an apparatus for generating a multi-level digest stream of a multimedia stream in accordance with an embodiment of the present invention. In the apparatus as illustrated in Figure 6, when a plurality of running times is displayed, one of which is queried by the user, a digest stream corresponding to the queried running time is provided.

As illustrated in Figure 6, the apparatus in accordance with an embodiment of the present invention includes a digest stream level determining unit 1 for determining and outputting the level of a digest stream corresponding to the running time queried by the user, upon receipt of a multimedia stream signal; a user input unit 2 for outputting the running time queried by the user to the digest stream level determining unit 1 by the operation of the user; a decoder 3 for outputting digest segments having a digest level by decoding based on the digest level which is inputted from the digest stream level determining unit 1, upon receipt of a multimedia stream signal; and a browsing/recording/editing unit 4 for sequentially browsing, recording, and editing the outputted digest segments.

The operation of the apparatus in accordance with an embodiment of the present invention thus described will now be described. Meanwhile, the operation of browsing, recording and editing performed by the browsing/recording/editing unit 4 is carried out by a well-known technique of the conventional art, and accordingly a detailed description thereof is omitted.

The digest stream level determining unit 1 includes a digest segment information scheme analyzing unit 11 and a digest stream information display unit 12. A content provider or a media file supplies the digest stream level determining unit 1 with a stream signal, and the digest stream level determining unit 1 determines a digest level of a user-selected digest stream. Herein, the multimedia stream signal includes a stream data and a content-based data of the stream, and the content-based data of the stream includes a multi-level digest segment information scheme.

The multi-level digest segment information scheme analyzing unit 11 computes the running time of each digest stream by analyzing the multi-level digest segment information scheme. The digest stream information display unit 12 displays the running time by computed digest streams to the outside.

When the user inputs a desired running time among the displayed running times, the running time is queried through the user input unit 2. The digest stream information display unit 12 determines a digest level of a digest stream corresponding to the queried running time, and outputs it to the decoder 3. The decoder 3 outputs digest segments having a digest level by decoding based on the digest level which is inputted from the digest stream level determining unit 1, upon receipt of a multimedia stream signal. The outputted digest segments are sequentially browsed, recorded, and edited by the browsing/recording/editing unit 4.

Taking example by Figure 4, if the digest level queried by the user is "1", the decoder 3 outputs digest segments of digest level "0" or "1" from the multimedia stream signal by decoding.

In this manner, only the digest level of a digest stream is inputted to the decoder 3, and the decoder 3 selects digest segments from the multimedia stream signal based on the digest level and outputs them to the browsing/recording/editing unit 4.

Figure 7 is a schematic block diagram of an apparatus for generating a multi-level digest stream of a multimedia stream in accordance with another embodiment of the present invention. The apparatus as shown in Figure 7 provides a digest stream with a running time most close to the running time queried by the user. As illustrated in Figure 7, the apparatus in accordance with another embodiment of the present invention includes a digest stream level determining unit 5, an user input unit 2, decoder 3, and a browsing/recording/editing unit 4. The digest stream level determining unit 5 includes a digest segment information scheme analyzing unit 11 and a digest level determining unit 51. Herein, the digest segment information scheme analyzing unit 11, decoder 3, and browsing/recording/editing unit 4 are identical with those illustrated in Figure 6.

When the user inputs a desired running time by the user input unit 2, the digest level determining unit 51 outputs the digest level of a digest stream with a running time most close to the running time inputted by the user. That is, the digest level determining unit 51 compares the running time queried by the user with the running time of a digest stream of each multi-level digest stream, selects a running time $R(H_k)$ most close to the queried running time, and outputs a digest level(k) of the digest stream with the selected running time $R(H_k)$ to the decoder 3. In Figure 5, the running time queried by the user is marked by a thick line. The running time corresponding to the digest level(k) is slightly longer than the queried running time, and the running time of a digest stream corresponding to a digest level(k-1) is slightly shorter than the queried running time.

The decoder 3 receives the multimedia stream signal, and outputs digest segments of a digest level lower than k or k-1, based on the digest level(k or k-1). The outputted digest segments are sequentially browsed, recorded and edited by the browsing/recording/editing unit 4.

Meanwhile, the embodiments of the present invention described above, in detail, the user input unit 2 as illustrated in Figures 6 and 7 is described by taking an operation of querying a running time of a digest stream for example, for the convenience of explanation. However, the user can queries other conditions besides a running time, the user input unit 2 can receive the conditions from the user, and the apparatus in accordance with the present invention provides a digest stream according to various conditions inputted by the user, which will be described below.

When the user inputs various conditions, for example, an occurrence of a event, a person, a background, an object, and a situation information, the digest stream level determining unit 5 constructs a digest stream based on the conditions, for example, an occurrence of a event, a person, a background, an object, and a situation information. The various conditions queried by the user are, for example, as follows:

> Digest "Titanic" movie to 10 minutes focusing on "Leonardo Dicaprio".
> Digest "Titanic" movie to 10 minutes focusing on sinking scene.
> Digest a music to 100 seconds focusing on piano.

According to these queries from the user, the digest stream level determining unit 5 construct a digest stream based on a running time and various query conditions or filtering conditions. By lowering or raising a digest level of a digest stream, a digest stream is constructed. For instance, although a digest segment has a low digest level(with a digest level value close to n), the digest segment is considered as a digest segment with a little higher digest level for thereby constructing a digest stream if it corresponds to a query condition(e. g., "sinking scene"). An occurrence of a event, a person, a background, an object, and a situation information mentioned above are information generally contained in a content-based data area of a multimedia stream.

Meanwhile, there is a need for rapidly accessing only the running time information of a possible digest stream for the convenience of applications. For this purpose, a digest level running time information or a digest stream running time information can be added to a primary digest segment information scheme as shown in Figure 2 or Figure 3. Herein, the digest level running time information is information in which the information about the sum of the running times of digest segments of the same digest level is described according to digest levels, and the running time information of the digest stream is a running time information of a possible digest stream.

Such running time information can be described using an extra data structure, for example, in the case of a multi-level digest segment information scheme as shown in Figure 2. In the case of a multi-level digest segment information scheme as shown in Figure 3, the running time information can be described in each digest level header, or described using other data structure.

The above-described digest level running time information or digest stream running time information can be used for a rapid running time computation and for a parity check for checking a damaged data.

The parity check is possible by comparing the total running time of digest segments of the same digest level with the digest level running time of that digest level, and also by comparing the total running time of digest segments corresponding to a digest level lower than a particular digest level with the digest stream running time of that digest level. More specifically, if the total running time of the digest segments of the same digest level and the digest level running time of that digest level are equivalent each other, it is determined that there is no data damage, and if the two running times are different, it is determined that there is a data damage. In addition, the total running time of digest segments having a digest level lower than a particular digest level and the digest stream running time corresponding to that digest level are equivalent each other, it is determined that there is no data damage, and if the two running times are different, it is determined that there is a data damage.

Meanwhile, in the case that only the information about a possible digest is queried by a digest stream browser, the corresponding information can be displayed by accessing only the digest level running time information or the digest stream running time information. In the case that the user determines a digest level from the information, a digest stream can be generated by accessing only an actual digest segment.

In this way, the digest level running time information and digest stream running time information additionally described in the multi-level digest segment information can be utilized for a rapid digest stream information transmission and for a parity check for determining whether or not there is a data damage.

As described above in detail, in the present invention, a multi-level digest segment information scheme is stored in the content-based segment information scheme of an original stream, and an importance level (i.e., digest level) of a digest level information, a time range information, etc. is given to a digest segment of the multi-level digest segment information scheme, whereby the amount of storage for storing a digest stream is greatly decreased and it takes a very little time to encode a digest stream.

Moreover, by dynamically generating a digest stream using a digest segment information scheme during an execution of an application, it is unnecessary to edit a digest stream and encode an actual data so as to provide a multi-level digest stream. Therefore, it is possible to dynamically provide a digest stream corresponding to the dynamically changing level of user's need for a digest stream while the amount of data is not increased largely. Also, the user can browse a digest stream of a desired level for a desired time by using a multi-level digest stream provided.

In addition, although it is explained above that a digest stream of a multimedia stream is provided for an user in a multimedia server system, the user can also understands the points of the content of the multimedia stream by accessing the digest stream when he or she has a CD(compact disc) for the content.

According to another aspect, a method of describing a multi-level digest stream of a multimedia stream comprises the steps of:

describing the level information of digest segments by multiple levels in the content-based data area of the multimedia stream;
describing the digest level information of the digest segments and the time range information of the digest segments in a digest segment information structure; and
describing a digest stream information scheme from the digest segments.

The time range information is the start point and end point of the digest segments, or the start point and duration of the digest segments.

A digest level running time information or a digest stream running time information is added to the digest segments, in which the digest level running time information is information in which the information about the sum of the running times of digest segments of the same digest level is described according to digest levels, and the running time information of the digest stream is a running time information of a possible digest stream.

According to another one aspect method of describing a multi-level digest stream of a multimedia stream resent invention comprises the steps of:

describing the digest level information of digest segments to a digest level header by multiple levels in the content-based data area of a multimedia stream;
describing the time range information of the digest segments in a digest segment information structure; and
describing a digest stream information scheme by arranging the digest segments of the same digest level in a time sequence among the above multiple digest segments.

The time range information is the start point and end point of the digest segments, or the start point and duration of the digest segments.

A digest level running time information or a digest stream running time information is added to the digest segments, in which the digest level running time information is information in which the information about the sum of running times of digest segments of the same digest level is described according to digest levels, and the running time information of the digest stream is a running time information of a possible digest stream.

According to another one aspect method of generating a multi-level digest stream of a multimedia stream comprises the steps of:

- detecting the digest level and time range information of the digest stream from the multi-level digest stream information scheme contained in the content-based data area of the multimedia stream; and

   when a condition is queried by the user, generating a multi-level digest stream by arranging the digest segments with a priority of more than a certain level corresponding to the condition in a time sequence.

A digest level running time information or a digest stream running time information is added to the digest segment information scheme, in which the digest level running time information is information in which the information about the sum of running times of digest segments of the same digest level is described according to digest levels, and the running time information of the digest stream is a running time information of a possible digest stream.

A parity check is performed by comparing the total running time of the plurality of digest segments of the same digest level with the digest level running time of that digest level.

A parity check could be also performed by comparing the total running time of digest segments having a digest level lower than a particular level among the plurality of digest segments with the digest stream running time of that digest level.

According to another aspect an apparatus for generating a multi-level digest stream of a multimedia steam comprises :

- a user input unit;
- a digest stream level determining unit for determining and outputting the level of a digest stream corresponding to a condition queried by the user, upon receipt of a multimedia stream signal; and
- a decoder 3 for outputting digest segments having a digest level by decoding based on the digest level which is inputted from the digest stream level determining unit 1, upon receipt of a multimedia stream signal.

The condition is the running time of a digest stream, or the condition is one of an appearance of an event, a person, a background, an object and a situation information about the person, and the running time of a digest stream.

A digest level information and a time range information, and/or the information on the sum of the running time of each digest segment are contained in the digest level.

The time range information the start point and end point of the digest segments, or the start point and duration of the digest segments.

According to another one aspect, the digest stream level determining unit comprises:

- a multi-level digest segment information scheme analyzing unit for computing the running time of each digest stream, by analyzing a multi-level digest segment information scheme contained in the content-based data of the multimedia stream signal; and
- a digest stream information display unit for selecting and querying a running time of a plurality of running times by the user, by displaying the running times by computed digest stream.

According to another one aspect the digest stream level determining unit comprises:

- a multi-level digest segment information scheme analyzing unit for computing the running time of each digest stream, by analyzing a multi-level digest segment information scheme contained in the content-based data of the multimedia stream signal; and
- a digest level determining unit for outputting a digest level of a digest stream corresponding to a running time most close to the queried running time, upon receipt of the above running time.

The digest level determining unit compares the running time queried by the user with the running time of a digest stream of each multi-level digest stream, selects a running time most close to the queried running time, and outputs a digest level of the digest stream with the selected running time to the decoder.

**Claims**

1. A method of describing a digest stream information for a multimedia content, comprising:

   - describing digest segment information for each digest segment;
   - describing digest segment group information using different levels of detail; and
   - describing a digest stream information with a set of digest segment group information.

2. The method of claim 1, wherein a first level '0' is the highest in priority.

3. The method of claim 1, wherein a digest stream associated with particular level accumulates more than digest segment included in digest segment group information corresponding to said level so as to provide a longer and more extensive digest stream of the multimedia content.

4. The method of claim 3, wherein a digest stream associated with n level is constructed based on the digest segment information whose level is less than or equal to n.

5. The method of claim 1, wherein the digest segment information further includes time range information, time ranges of digest segments included in the digest stream information do not overlap with one another.

6. The method of claim 5, wherein digest segments included in the digest stream information are arranged in a time sequence.

7. A method of describing digest segment group information for multimedia contents, the method comprising:

   describing a level information and a duration information of said digest segment group, wherein said digest segment group includes a set of digest segments, and wherein the level information can be described by multiple levels.

8. The method of claim 7, wherein a first level '0' is the highest in priority.

9. The method of claim 8, wherein n-th digest segment group information includes digest segments whose digest level is n.

10. The method of claim 9, wherein n-th digest stream is constructed based on digest segment group information whose level is less than or equal to n.

11. The method of claim 10, wherein digest segments in a digest stream are arranged in a time sequence.

12. A digest segment group description for describing a summary of multimedia contents, comprising:

   a level information and a duration information of said digest segment group, wherein said digest segment group includes a set of digest segments, and wherein the level information can be described by multiple levels.

13. The digest segment group description of claim 12, wherein a first level '0' is the highest in priority.

14. The digest segment group description of claim 13, wherein n-th digest segment group information includes digest segments whose digest level is n.

15. The digest segment group description of claim 14, wherein n-th digest stream is constructed based on digest segment group information whose level is less than or equal to n.

16. The digest segment group description of claim 15, wherein digest segments in a digest stream are arranged in a time sequence.

# FIG.1

ORIGINAL STREAM · · · · TIME

DIGEST LEVEL 0
DIGEST LEVEL 1
DIGEST LEVEL 2

DIGEST SEGMENT

# FIG.2

TIME

1  2  3  4  5  · · · ·

DIGEST SEGMENT
INFORMATION STRUCTURE ID

DIGEST SEGMENT INFORMATION STRUCTURE

DIGEST LEVEL INFORMATION
TIME RANGE INFORMATION
(START,END)

# FIG.3

DIGEST LEVEL HEADER

TIME

| $L_0$ | 5 | 10 | 30 | 138 |

| $L_1$ | 12 | 22 | 40 | 50 | 54 | 70 | 88 |

| $L_2$ | 16 | 32 | 35 | (44) | 53 | 62 |

DIGEST SEGMENT INFORMATION
STRUCTURE ID

| $L_{n-3}$ | 2 | 9 | 37 | 99 | 120 |

| $L_{n-2}$ | 1 | 19 |

| $L_{n-1}$ | 7 | 38 | 49 | 117 | · · · · | 130 | 140 |

DIGEST
LEVEL

DIGEST SEGMENT INFORMATION
STRUCTURE

TIME RANGE INFORMATION
(START, END)

# FIG.4

# FIG.5

RUNNING TIME OF DIGEST STREAM

USER-QUERIED RUNNING TIME

······

······

0    1    2    ······    (k-1) (k)  k+1    ······    n-4  n-3  n-2  n-1

DIGEST LEVEL

# FIG.6

1
11

MULTIMEDIA
STREAM SIGNAL →

MULTIPLE LEVEL DIGEST
SEGMENT INFORMATION
SCHEME ANALYZING UNIT

12

DIGEST STREAM
DISPLAY UNIT

DECODER

3

BROWSING/RECORDING/
EDITING UNIT

4

USER INPUT UNIT

2

# FIG.7

5
11

MULTIMEDIA
STREAM SIGNAL →

MULTIPLE LEVEL DIGEST
SEGMENT INFORMATION
SCHEME ANALYZING UNIT

51

DIGEST LEVEL
DETERMINING UNIT

DECODER

3

BROWSING/RECORDING/
EDITING UNIT

4

USER INPUT UNIT

12